# EUROPEAN PATENT SPECIFICATION

(11) **EP 3 510 004 B1**
(45) Date of publication and mention of the grant of the patent: **24.11.2021**
(21) Application number: 16766642.9
(22) Date of filing: 09.09.2016
(51) Int. Cl.: C03C 25/32, C03C 25/50, C08G 63/48, C09D 167/08

(54) **OPTICAL FIBRE COATED WITH A POLYESTER COATING**
OPTISCHE FASER MIT EINER POLYESTERBESCHICHTUNG
FIBRE OPTIQUE REVÊTUE D'UN REVÊTEMENT EN POLYESTER

(43) Date of publication of application: 17.07.2019
(73) Proprietor: Prysmian S.p.A., 20126 Milan (IT); Politecnico di Milano, 20133 Milano (IT)
(72) Inventor: TERRUZZI, Lidia, 20126 Milan (IT); DE MARTINO, Pamela, 20126 Milan (IT); CITTERIO, Attilio, 20133 Milano (IT); GOLA, Massimo, 20133 Milano (IT)
(74) Representative: Marturano, Pasqualino
(86) International application number: PCT/IB2016/055389
(87) International publication number: WO 2018/046984

(56) References cited:
- CH-A- 358 063
- US-A1- 2002 132 118

## Description

### Field of the invention

The present invention relates to an optical fibre coated with a polyester coating. The polyester coating can be either radiation cured or, more advantageously, thermally cured. The optical fibre of the present invention is a valuable alternative to the optical fibres coated with conventional polymeric materials that need to be cured by means of radiation at controlled temperature, such as UV-curable acrylate polymer materials.

### Background of the invention

Optical fibres commonly comprise a glass core, inside which the transmitted optical signal is confined, surrounded by a cladding (typically with a diameter of about 120-130 µm), preferably made of glass. The combination of core and cladding is usually identified as "optical waveguide". The optical waveguide is generally protected by a coating, typically of polymeric material, which protects the glass of the fibre from the external environment and provides resistance to physical handling forces, such as those encountered when the fibre is subjected to cabling operations. The coating typically comprises a first coating layer positioned in direct contact with the cladding, also known as the "primary coating", and at least one second coating layer, also known as "secondary coating", surrounding the first coating. In the art, the combination of primary coating and secondary coating is sometimes also identified as "primary coating system", as both these layer are generally applied during the drawing manufacturing process of the fibre. In this case, the coating in contact with the cladding is called "inner primary coating" while the coating in contact with and surrounding the inner primary coating is called "outer primary coating". In some instance, a single coating can be applied in contact with the cladding. Thereafter, the term "primary coating" shall designate the inner primary coating and the term "secondary coating" shall designate the outer primary coating.

Generally, the primary coating is made of a relatively soft material having a relatively low modulus of elasticity E' at room temperature (typically of from 0.1 MPa to 5 MPa) and a low Tg, for example lower than -20°C. The secondary coating is generally formed by a more rigid polymer having a higher modulus of elasticity E' at room temperature (typically of from 500 MPa to 2000 MPa) and a higher glass transition temperature (Tg) compared to those of the primary coating layer.

For certain applications, optical waveguide may be coated with a single coating layer having modulus of elasticity and Tg values which are intermediate between those of the primary coating and the secondary coating. The overall diameter of the optical waveguide with the primary and secondary coating can be of from 150 to 250 µm.

The polymer materials generally used to form primary coatings, secondary coatings and single layer coatings are obtained from compositions comprising acrylate oligomers and monomers that are crosslinked by means of UV radiation in the presence of a suitable photoinitiator. The acrylate polymer coatings, however, should be formed on the optical waveguide at relatively low temperatures, e.g. from ambient temperature to about 50°C, and cured in the presence of an inert atmosphere (e.g. under nitrogen gas) in order to avoid the thermal degradation of the polymer materials and guarantee the proper adhesion of the coating layer to the optical waveguide. These constraints require the use of special apparatuses for controlling the temperature during the polymer deposition and curing process. Typically, radiation curing ovens are continuously flushed with inert gases (e.g. nitrogen or helium) in order to maintain the required conditions.

The need for the above-described stringent operating conditions, apparently, make the manufacturing process of the optical fibres and the apparatus used for carrying out the process thereof rather complex and costly.

### Summary of the invention

The Applicant has faced the problem of providing a polymer material suitable for forming coating layers on optical fibres that can be cured at a relatively high temperature, either thermally or by radiation, in order to simplify the manufacturing process of coated optical waveguide.

In particular, the Applicant has faced the problem of providing a polymer material suitable for forming coating layers on optical waveguides which is thermocurable, so that it could be applied to the optical waveguide without using radiation devices, such as UV ovens, which require precise temperature control and the presence of inert gas.

The Applicant has found that the above problems and others that will appear more clearly from the following description can be solved by polymer materials which contain certain polyesters that can be cured either by heat or radiation at temperatures up to 300°C.

When cured by heat, the polyesters according to the invention have the advantage of being applicable during the drawing process of the fibre before the drawn fibre is cooled down close to room temperature, and of exploiting the heat of the just drawn glass fibre as heat source for curing.

When cured by radiation, the polyesters according to the invention have the advantage of allowing the use of less controlled operating conditions, particularly during the curing step, because these polymers have less sensitivity to thermal degradation even when cured in the presence of oxygen.

The cured polymer materials according to the invention have mechanical properties, in particular elasticity and adhesion to the glass surface of the fibre, which make the coated optical fibre suitable for use over a wide range of temperature (e.g. from -60°C to +150°C). The coating polymer materials according to the invention can be used as primary, secondary or single coating, preferably as primary and single coatings of optical fibres.

According to the invention, the present polyesters can be obtained by polymerization of monomers having a specific unsaturation.

According to a first aspect, therefore, the present invention relates to an optical fibre comprising:
- an optical waveguide comprising a glass core surrounded by a glass cladding;
- a coating surrounding said optical waveguide comprising a cured polymer material comprising a polyester obtained by polymerization of a monomer selected from an acid, a triglyceride, or a mixture of triglycerides having a C₁₆-C₂₄ aliphatic chain comprising at least two conjugated double bonds.

According to a second aspect, the present invention relates to a method for coating an optical fibre comprising:
- providing an optical waveguide comprising a glass core surrounded by glass a cladding;
- applying a radiation curable coating composition on the cladding, said coating composition comprising a polyester obtained by polymerization of a monomer selected from an acid, a triglyceride, or a mixture of triglycerides having a C₁₆-C₂₄ aliphatic chain comprising at least two conjugated double bonds;
- curing said radiation curable coating composition so as to crosslink said polyester and to form the coating.

Unlike the known acrylate based optical fibre coatings typically obtained by reacting a polyisocyanate, a (poly)alcohol, a (meth)acrylate monomer and a photoinitiator, often in the presence of viscosity adjusters and/or diluents and/or adhesion promoters, to give a urethane (meth)acrylate oligomer which is admixed at least with a reactive diluent to provide the optical fibre coating material, the optical fibre coating material of the present invention is based on just one class of main components.

This class of components is made of monomers selected from an acid, a triglyceride, or a mixture of triglycerides having a C₁₆-C₂₄ aliphatic chain comprising at least two conjugated double bonds, said monomers polymerizing one another to give place to a polyester polymer.

Differently from the previous patent application no. PCT/IB2016/054380 filed on 22 July 2016 by the same Applicant, according to the present invention the polymerization of the monomers is carried out in the absence of polyols made of at least one monomer comprising at least 3 hydroxyl groups, the polyol being thermally stable up to 300°C.

For the purpose of the present description and of the claims that follow, as described in the said patent application no. PCT/IB2016/054380, by "thermally stable" it is meant that a substance heated up to 300°C, at atmospheric pressure and in air, has a weight loss from 0 wt% to 2 wt% of its weight. The weight loss can be calculated for example by thermogravimetric analysis (TGA; 20°C/min) US-2002132116 describes an optical waveguide comprising a glass core surrounded by a glass cladding;- a coating surrounding said optical waveguide comprising a cured polymer material comprising an urethane methacrylate obtained by polymerization of a monomer methacrylate, an polyisocyante and an acid. selected from an acid, a triglyceride, or a mixture of triglycerides having a C16 -C24 aliphatic chain.CH-358063 relates to a yarn comprising staple glass fibers coated with a cured oil modified resinous material, particularly an oil modified alkyd resin which is formed by condensation reaction of a polybasic acid with a polyhydric alcohol.

For the purpose of the present description and of the appended claims, the words "a" or "an" are used to describe elements and components of the invention. This is done merely for convenience and to give a general sense of the invention. In this description and claims the words "a" or "an" should be read to include one or at least one and the singular also includes the plural unless it is obvious that it is meant otherwise.

For the purpose of the present description and of the appended claims, the values of modulus of elasticity E' and Tg are meant to be determined by means of Dynamic Mechanical Thermal Analysis (DMTA) in tension. Tg is derived from the DMTA curve obtained by on-set point method.

For the purpose of the present description and of the claims that follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

### Detailed description of the invention

According to the invention, a coating for optical fiber can be obtained by polymerizing a monomer which is an acid, a triglyceride, or a mixture of triglycerides having a C₁₆-C₂₄ aliphatic chain comprising at least two conjugated double bonds. The Applicant has observed that monomers lacking chains with at least two conjugated double bonds are unsuitable for the purpose of the present invention, as the polyester derived from their polymerization is either not sufficiently crosslinkable or is crosslinkable only after curing times too long for a convenient industrial application.

Preferably, the acid having a C₁₆-C₂₄ aliphatic chain comprising at least two conjugated double bonds as monomer is a monocarboxylic acid.

The acid having a C₁₆-C₂₄ aliphatic chain comprising at least two conjugated double bonds as monomer suitable for the present invention can also be in form of salt or of salt mixture thereof.

For example, the acid having a C₁₆-C₂₄ aliphatic chain comprising at least two conjugated double bonds is alpha-eleostearic acid (a-ESA; 9Z11E13E-18:3), calendic acid (8E10E12Z-18:3), punicic acid (9E11E13Z-18:3) or licanic acid (4-keto-octadeca-9,11,13-trienoic acid). Alpha-eleostearic acid is preferred.

In an embodiment of the invention, coating for optical fibres can be obtained from a monomer which is a triglyceride or a mixture of triglycerides comprising at least one C₁₆-C₂₄ aliphatic chains comprising at least two conjugated double bonds. Vegetable oils or seed oils can contain such triglycerides or mixture of triglycerides in an amount of from 30 wt% to 80 wt%.

Advantageously, the monomer suitable for the present invention is a triglyceride or mixture of triglycerides containing at least 70% by weight, based on the total weight of said triglyceride or mixture of triglycerides, of C₁₆-C₂₄ aliphatic chains comprising at least two conjugated double bonds. When the level of C₁₆-C₂₄ aliphatic chain comprising at least two conjugated double bonds in an oil is lower than 70 wt%, known techniques can be applied to concentrate the polyunsaturated conjugated part, e.g. by fractional crystallization.

Mixture of triglycerides having the above amount of C₁₆-C₂₄ aliphatic chains comprising at least two conjugated double bonds are commercially available, e.g. as tung oil, pomegranate seed oil, calendula oil, and their mixtures.

In the case of triglycerides or mixture thereof, C₁₆-C₂₄ aliphatic chain monomers according to the invention can also react with monomers having different aliphatic chains and being contained in the triglyceride or mixture thereof, resulting in polyester copolymer by-products. These by-products, if any, are generally present in negligible amounts not affecting the features and performance of the cured polymer material comprising the polyester according to the present invention.

The use of triglycerides as monomer can be advantageous with respect to the use of an acid as such in that the first is economically profitable.

To prepare the polyesters suitable for the coating of the present invention, the monomer can be polymerized using the techniques and the devices well known to the person skilled in the art. See, for example, C. Wang and S. Erhan, Journal of the American Oil Chemists' Society (JAOCS), Vol. 76, no. 10 (1999). The polymerization reaction of the monomer according to the invention is carried out, for example, in the presence of oxygen and heating at a temperature of from 150°C to 300°C in the absence of any polymerization initiator.

A catalyst, such as an acid catalyst, may be added. Examples of catalysts are: rare earth oxides, rare earth salts and transition metal salts, organometallics, and the like.

Preferably the catalyst of the present polymerization reaction is a tin or a titanium catalyst. Examples of preferred catalyst according to the invention are: metal oxyacid salts, or tin salts (such as tin tetrachloride), titanium tetrachloride, iodonium derivatives, palladium, platinum, rhodium and complexes thereof.

Preferably, the catalyst is used in an amount within the range of from 0.1 to 3 mol%, based on the total moles of acid present in the reaction mixture, when the acid is used as such, or from 0.1 to 0.8 mol% of monomer.

Preferably, the polymerization reaction is carried out at a pressure within the range from 1 atm to 4 atm.

Preferably, the reaction time is within the range from 0.015 hours to 2 hours.

Preferably, the polymerization reaction is carried out in the absence of any added solvent so as to avoid any contamination of the polymer coating applied on the optical waveguide.

The polyester suitable for the coating of the present invention is radiation curable. Radiation includes infrared radiation, thermal radiation, ultraviolet radiation, X-rays, electron beams, and the like. Thermal and UV radiation are preferred, the first being more preferred. Other curing method can be applied concurrently with the radiation curing.

According to a first preferred embodiment, the cured polymer material of the coating is obtained by thermally curing the present polyester. Thermal curing is preferably carried out at a temperature up to 300°C, more preferably within the range of 200°C to 300°C. The reaction time can be from 0.1 to 2 minutes.

The curing of the polyester can take place also by crosslinking in the presence of oxygen. Oxygen can behave as crosslinking initiator or adjuster. Catalytic amounts of transition metal salts can be conveniently used to improve the crosslinking effect of oxygen. The desired final properties of the cured polymer can be adjusted by varying both the curing temperature and the curing time, as these two parameters influence the crosslinking density of the curing reaction and thus the degree of crosslinking of the polymer.

Optionally, curing of the polyester can be done in the presence of a radical thermal or redox initiator.

Preferably, thermal initiators having an activation temperature within the range of from 60°C to 300°C are used. Examples of thermal initiators that can be used for the purpose of the present invention are: 2,2'-azobis(2-methylpropionitrile), meso-1,2-dibromo-1,2-diphenylethane, tretraalkyl-1,2-diphenylethanes.

When a thermal initiator is used, a thermocurable composition comprising a polyester and a thermal initiator is prepared, wherein said initiator is preferably present in an amount of from 0.3 wt% to 8 wt%, more preferably from 0.5 wt% to 5 wt%, based on the weight of the thermocurable composition.

According to a second preferred embodiment, the coating of the present invention is obtained by UV-curing the polyester, particularly in the presence of a photoinitiator. Conventional photoinitiators can be used in the present invention. Examples of suitable photinitiators include benzophenone- and/or acetophenone derivatives, such as alpha-hydroxy alkylphenyl ketones, benzoin alkyl ethers and benzyl ketals, monoacylphosphine oxides, and bisacylphosphine oxides. Preferred photoinitiators are 1-hydroxy-cyclohexyl phenyl ketone, 2-hydroxy-2-methyl-1-phenyl-propan-1-one, and diphenyl(2,4,6-trimethylbenzoyl)-phosphine oxide.

When a photoinitiator is used, a UV-curable composition comprising a polyester and a photoinitiator is prepared, wherein said photoinitiator is present in an amount of from 0.3 wt% to 8 wt%, more preferably from 0.5 wt% to 5 wt%, based on the weight of the radiation curable composition.

Under certain reaction conditions, for example at a temperature of from 200 to 300°C, and in the presence of a radical thermal or redox initiator, the monomer suitable to obtain the coating of the present invention can be polymerized and cured in a single stage.

The radiation cured polymer material for the coating of the present invention can also include other conventional additives in effective amounts. For example, additives such as stabilizers, levelling agents, adhesion promoters, chain transfer agents, colorants including pigments and dyes, viscosity adjusters, wettability adjusters, adhesion promoters and the like can be used.

The cured polymer material suitable for the present invention can be prepared by mixing the components with any suitable method known in the art.

After curing, the polymers obtained have mechanical properties, elasticity and adhesion properties which make them suitable as coating layers for optical fibres. Particularly, the cured polymer materials according to the present invention have modulus of elasticity (E') and glass transition temperature which fulfil the requirements for use as primary coating layers, secondary coatings or single coating layers. Preferably, the coating materials of the present invention are used as primary coating layers and single coating layers.

When used as primary coating layer, the cured polymer material of the present invention preferably has a modulus of elasticity (E') at 25°C of from 0.01 to 5 MPa, more preferably of from 0.05 to 5 MPa, and a glass transition temperature (Tg) of -20°C at most, preferably of -30°C at most.

When used as single coating layer, the cured polymer material of the present invention preferably has a modulus of elasticity (E') at 25°C of from 20 to 100 MPa, more preferably of from 30 to 80 MPa, and a glass transition temperature (Tg) of 20°C at most, preferably of 0°C at most.

When used as secondary coating layer, the cured polymer material of the present invention preferably has a modulus of elasticity (E') at 25°C of from 500 to 2000 MPa, and a glass transition temperature (Tg) greater than 50°.

When the present polyester is used to form a primary coating on an optical fibre, a secondary coating surrounding said primary coating can also be applied using the polymer materials conventionally used in the art for the manufacturing of secondary coatings, for example a UV curable acrylate secondary coating.

A secondary coating usable in the fibre of the present invention in combination with a thermally curable primary coating can comprise a polymer selected from: methacrylate polymer, acrylate polymer and mixtures thereof. In particular, the secondary coating comprises urethane acrylate polymers which can be obtained, for instance, by radiation curing a radiation curable composition comprising an oligomer having a backbone derived from polypropylenglycol and a dimer acid based polyester polyol. A material suitable for the secondary coating of the optical fibre of the invention is disclosed in WO2012036546 or is marketed by DeSolite® 3471-2-136.

The manufacturing of the coated optical fibre according to the present invention can be carried out according to known techniques. For example, after drawing of the optical waveguide a primary coating can be applied by passing the optical waveguide through a sizing die and a reservoir containing the curable polyester according to the present invention. When a thermally curable composition is used, the application can advantageously be done when the optical waveguide has a suitable temperature, e.g. from 150°C to 300°C, so as to exploit the heat of the drawn optical waveguide to obtain the final cured polymer material. When a radiation curable polymer or composition is applied, the application step is followed by radiation curing (e.g. by UV or IR) of the applied composition so as to obtain the final polymer material. In the case of deposition of both a primary and a secondary coating, the latter is applied on the primary coating before or after the curing of the secondary coating (by techniques known as wet-on-dry or wet-on-wet deposition).

An optical fibre thus produced may be used in the production of optical cables. The fibre may be used either as such or in the form of ribbons comprising several fibres combined together by means of a common coating.

The present description shows only some embodiments of a coated optical fibre according to the invention. Suitable modifications can be made to these embodiments according to specific technical needs and application requirements without departing from the scope of the invention.

The following examples are provided to further illustrate the invention.

### EXAMPLES

### Synthesis of the polyester

Polyester polymers according to the present invention were prepared using the following procedure. Tung oil, a triglyceride according to the invention containing α-eleostearic acid (82 wt%), linoleic acid (8 wt%), palmitic acid (5 wt%, oleic acid (5 wt%, weight percentages referred to the weight of the oil) was heated up to 260°C for 1 minute, in the presence of air. This procedure yielded a cured polyester homopolymer in the form of a film.

The modulus of elasticity (E') at -30°C, +25°C and +100°C and the glass transition temperature of each of the cured film as determined by means of dynamic mechanical analysis are compiled in Table 1. Comparative results obtained on films of commercial primary coating C1 (DP1014-XS by DSM) and single coating SC (3471-3-14 by DSM) compositions are also reported in Table 1. The curing conditions for the reference coating were as indicated by the supplier.

**TABLE 1**

| | | E' (MPa) | | | Tg (°C) |
|---|---|---|---|---|---|
| Sample no. | Curing conditions (°C - min) | -30°C | +25°C | +100°C | on-set point |
| 1 | | 679 | 1.05 | 0.55 | -41.18 |
| C1 | - | 33.33 | 0.882 | 1.12 | -46.7 |
| sc | - | 1300 | 200 | < 3 | 5 |

As shown by the above results, the cured polymers based on the polyesters according to the present invention have adequate mechanical properties for use as primary coating for optical fibres.

## Claims

1. An optical fibre comprising:
- an optical waveguide comprising a glass core surrounded by a glass cladding;
- a coating surrounding said optical waveguide comprising a cured polymer material comprising a polyester obtained by polymerization of a monomer selected from an acid, a triglyceride, or a mixture of triglycerides having a C₁₆-C₂₄ aliphatic chain comprising at least two conjugated double bonds.

2. The optical fibre according to claim 1, wherein said cured polymer material is a thermally cured polymer material.

3. The optical fibre according to claim 1, wherein the monomer is a monocarboxylic acid.

4. The optical fibre according to claim 1, wherein the monomer is an acid selected from alpha-eleostearic acid, calendic acid, punicic acid or licanic acid.

5. The optical fibre according to claim 1, wherein the monomer is a triglyceride or a mixture of triglycerides containing at least 70 wt%, based on the total weight of said triglyceride or mixture of triglycerides, of C₁₆-C₂₄ aliphatic chains comprising at least two conjugated double bonds.

6. The optical fibre according to claim 1, wherein the polymerization is carried out in the presence of a catalyst selected from tin or titanium catalyst.

7. The optical fibre according to claim 1, wherein said coating is selected from: primary coating and single coating.

8. The optical fibre according to claim 1, wherein said coating is a primary coating which is surrounded by a secondary coating, said secondary coating comprising a polymer selected from: methacrylate polymer, acrylate polymer and mixtures thereof.

9. A method for coating an optical fibre comprising:
- providing an optical waveguide comprising a glass core surrounded by a glass cladding;
- applying a radiation curable coating composition on the cladding, said coating composition comprising a polyester obtained by polymerization of a monomer selected from an acid, a triglyceride, or a mixture of triglycerides having a C₁₆-C₂₄ aliphatic chain comprising at least two conjugated double bonds;
- curing said radiation curable coating composition so as to crosslink said polyester and to form the coating.

10. The method according to claim 9 wherein the polymerization is carried out in the presence of a catalyst.

## Patentansprüche

1. Eine optische Faser aufweisend:
- Einen Lichtwellenleiter mit einem Glaskern, der von einer Glasummantelung umgeben ist;
- eine den Lichtwellenleiter umgebende Beschichtung, die ein gehärtetes Polymermaterial umfasst, das einen Polyester umfasst, der durch Polymerisation eines Monomers erhalten wird, das aus einer Säure, einem Triglycerid oder einer Mischung von Triglyceriden mit einer aliphatischen C₁₆-C₂₄-Kette, die mindestens zwei konjugierte Doppelbindungen umfasst, ausgewählt ist.

2. Optische Faser nach Anspruch 1, wobei das gehärtete Polymermaterial ein thermisch gehärtetes Polymermaterial ist.

3. Optische Faser nach Anspruch 1, wobei das Monomer eine Monocarbonsäure ist.

4. Optische Faser nach Anspruch 1, wobei das Monomer eine Säure ist, die aus Alpha-Eleostearinsäure, Calendinsäure, Punicinsäure oder Icansäure ausgewählt ist.

5. Optische Faser nach Anspruch 1, wobei das Monomer ein Triglycerid oder ein Gemisch von Triglyceriden ist, das mindestens 70 Gew.-%, bezogen auf das Gesamtgewicht des Triglycerids oder des Gemischs von Triglyceriden, an aliphatischen C₁₆-C₂₄-Ketten mit mindestens zwei konjugierten Doppelbindungen enthält.

6. Optische Faser nach Anspruch 1, wobei die Polymerisation in Gegenwart eines Katalysators, ausgewählt aus Zinn- oder Titankatalysator, durchgeführt wird.

7. Optische Faser nach Anspruch 1, wobei die Beschichtung ausgewählt ist aus: Primärbeschichtung und Einfachbeschichtung.

8. Optische Faser nach Anspruch 1, wobei die Beschichtung eine primäre Beschichtung ist, die von einer sekundären Beschichtung umgeben ist, wobei die sekundäre Beschichtung ein Polymer umfasst, das ausgewählt ist aus: Methacrylatpolymer, Acrylatpolymer und Mischungen davon.

9. Verfahren zum Beschichten einer optischen Faser, umfassend:
- Bereitstellen eines Lichtwellenleiters mit einem Glaskern, der von einem Glasmantel umgeben ist;
- Aufbringen einer strahlungshärtbaren Beschichtungszusammensetzung auf den Mantel, wobei die Beschichtungszusammensetzung ein Polyester umfasst, das durch Polymerisation eines Monomers erhalten wird, das aus einer Säure, einem Triglycerid oder einer Mischung von Triglyceriden mit einer aliphatischen C₁₆-C₂₄-Kette, die mindestens zwei konjugierte Doppelbindungen umfasst, ausgewählt ist;
- Härten der strahlungshärtbaren Beschichtungszusammensetzung, um den Polyester zu vernetzen und die Beschichtung zu bilden.

10. Verfahren nach Anspruch 9, wobei die Polymerisation in Gegenwart eines Katalysators durchgeführt wird.

## Revendications

1. Fibre optique comprenant :
- un guide d'onde optique comprenant une âme en verre entourée d'une gaine en verre ;
- un revêtement entourant ledit guide d'onde optique comprenant un matériau polymère durci comprenant un polyester obtenu par polymérisation d'un monomère sélectionné parmi un acide, un triglycéride, ou un mélange de triglycérides ayant une chaîne aliphatique en C₁₆-C₂₄ comprenant au moins deux doubles liaisons conjuguées.

2. Fibre optique selon la revendication 1, dans laquelle ledit matériau polymère durci est un matériau polymère durci thermiquement.

3. Fibre optique selon la revendication 1, dans laquelle le monomère est un acide monocarboxylique.

4. Fibre optique selon la revendication 1, dans laquelle le monomère est un acide sélectionné parmi l'acide alpha-éléostéarique, l'acide calendique, l'acide punicique ou l'acide licanique.

5. Fibre optique selon la revendication 1, dans laquelle le monomère est un triglycéride ou un mélange de triglycérides contenant au moins 70 % en poids, sur la base du poids total dudit triglycéride ou mélange de triglycérides, de chaînes aliphatiques en C₁₆-C₂₄ comprenant au moins deux doubles liaisons conjuguées.

6. Fibre optique selon la revendication 1, dans laquelle la polymérisation est effectuée en présence d'un catalyseur sélectionné parmi un catalyseur à l'étain ou au titane.

7. Fibre optique selon la revendication 1, dans laquelle ledit revêtement est sélectionné parmi : un revêtement primaire et un revêtement unique.

8. Fibre optique selon la revendication 1, dans laquelle ledit revêtement est un revêtement primaire qui est entouré d'un revêtement secondaire, ledit revêtement secondaire comprenant un polymère sélectionné parmi : un polymère de méthacrylate, un polymère d'acrylate et les mélanges de ceux-ci.

9. Procédé de revêtement d'une fibre optique comprenant :
- la fourniture d'un guide d'onde optique comprenant une âme en verre entourée d'une gaine en verre ;
- l'application d'une composition de revêtement durcissable sous rayonnement sur la gaine, ladite composition de revêtement comprenant un polyester obtenu par polymérisation d'un monomère sélectionné parmi un acide, un triglycéride, ou un mélange de triglycérides ayant une chaîne aliphatique en C₁₆-C₂₄ comprenant au moins deux doubles liaisons conjuguées ;
- le durcissement de ladite composition de revêtement durcissable sous rayonnement de manière à réticuler ledit polyester et à former le revêtement.

10. Procédé selon la revendication 9, dans lequel la polymérisation est effectuée en présence d'un catalyseur.
